# EUROPEAN PATENT SPECIFICATION

(11) **EP 2 980 009 B1**
(45) Date of publication and mention of the grant of the patent: **23.09.2020**
(21) Application number: 14774680.4
(22) Date of filing: 07.03.2014
(51) Int. Cl.: B67C 3/24, B65G 47/86, B65G 47/90

(54) **CONTAINER GRIPPER**
BEHÄLTERGREIFVORRICHTUNG
APPAREIL DE PRÉHENSION DE CONTENANT

(30) Priority: 28.03.2013 JP 2013070200
(43) Date of publication of application: 03.02.2016
(73) Proprietor: Mitsubishi Heavy Industries Machinery Systems, Ltd., Hyogo-ku, Kobe-shi Hyogo 652-8585 (JP)
(72) Inventor: INUKAI Norio, Nagoya-shi Aichi 453-0862 (JP)
(74) Representative: Hoffmann Eitle
(86) International application number: PCT/JP2014/055940
(87) International publication number: WO 2014/156554

(56) References cited:
- WO-A1-2011/015371
- WO-A1-2012/123566
- DE-A1-102005 014 838
- DE-U1-202006 004 641
- JP-A- H11 236 123
- JP-A- 2002 128 193
- JP-A- 2002 540 027
- JP-A- 2005 212 840
- JP-A- 2006 327 679
- JP-A- 2007 197 021
- JP-A- 2011 251 818
- US-A1- 2010 200 367
- US-A1- 2010 282 364
- US-B1- 6 523 874

## Description

### Technical Field

The present invention relates to a container gripper that is used to convey and deliver a bottle can. Priority is claimed on Japanese Patent Application No. 2013-070200, filed March 28, 2013.

### Background Art

In the past, a gripper, which can hold a head part of a bottle can, has been known as a container gripper used to convey and deliver a bottle can (Japanese Unexamined Patent Application Publication No. 2007-197021). Citation List

JP2005-212840 A discloses a container gripper with the pre-characterizing features of claim 1.

### Summary of Invention

### Technical Problem

The device of Japanese Unexamined Patent Application Publication No. 2007-197021 includes a pair of grippers formed of a gripper that grips and holds a lower portion of a neck part formed below a male screw portion of a bottle can, and a gripper that grips and holds an upper portion of the neck part. In the device of Japanese Unexamined Patent Application Publication No. 2007-197021, the respective conveying rotors are alternately provided with a pair of grippers in a liquid-filling and packaging production line that performs the washing of the bottle can, the filling of the bottle can with liquid, and capping. Upper and lower portions, which are formed below a male screw part, of the bottle can, which is conveyed by a constant pitch on the circumferences of the rotors having a certain size, are alternately gripped in this way, so that the bottle can is subjected to neck conveyance.

However, when an upper portion of the neck part of the bottle can is held in a technique of Japanese Unexamined Patent Application Publication No. 2007-197021, a spherical portion of the can is held. For this reason, there is a possibility that the posture of the can may not be vertical and a conveyance failure may be generated. Further, when a lower portion of the neck part of the bottle can is held, the width of the contact portion between a holding portion and a large-diameter can is small. For this reason, there is a possibility that the posture of the can may not be vertical and a conveyance failure may be generated. Furthermore, since a positioning member that limits the shift of the container in the vertical direction, an adjustment mechanism of which a protruding amount can be changed to adjust the position of the container in a radial direction, and a guide are required, a holding mechanism is complicated. For this reason, there is a possibility that costs may increase.

The invention provides a container gripper that does not require a positioning member of which the changing of a protruding amount is accompanied when a head part of a container (bottle can) is held. Further, the invention provides a container gripper that can position a container in a vertical direction or stabilize the holding posture of a container. Furthermore, the invention provides a container gripper of which container holding portions of holding pieces are not easily worn out and which can hold a container without damage to the held portion of the container. In addition, the invention provides a container gripper that can be used both when the diameter of a head part is large and when the diameter of a head part is small.

### Solution to Problem

This object is solved by a container gripper with the features of claim 1. Preferred embodiments follow from the other claims.

According to a first aspect of the invention, there is provided a container gripper including grippers each of which includes a pair of holding pieces provided so as to be openable/closable by relative movement and includes holding portions allowing a head part of a container to be taken in and out when the gripper is opened and restraining the head part when the gripper is closed, in which the holding of the container is alternately switched from a first gripper to a second gripper, so that the container is delivered. The holding portions of the first gripper includes holding pieces that have a holding shape adapted to a neck part formed at the head part and hold at least half of the circumference of the neck part. The holding portions of the second gripper include an upper holding piece that is engaged with a groove of a male screw part formed at the head part and holds at least half of the circumference of the groove, and a lower holding piece that is engaged with a lower portion of the neck part and holds at least half of the circumference of the lower portion.

According to the container gripper that delivers the container by alternately switching the holding of the container as described above, the container holding portions of the first gripper include holding pieces that have a holding shape adapted to the neck part formed at the head part of the container and hold at least half of the circumference of the neck part, and the container holding portions of the second gripper include an upper holding piece that is engaged with a groove of a male screw part formed at the head part of the container and holds at least half of the circumference of the groove, and a lower holding piece that is engaged with a lower portion of the neck part and holds at least half of the circumference of the lower portion. Accordingly, the holding pieces of the first gripper have a holding shape adapted to the neck part and hold the container so that the vertical posture of the container does not collapse and the container is positioned in the vertical direction; and the second gripper holds the container at two portions, that is, upper and lower holding pieces so that the vertical posture of the container does not collapse, and can position the container in the vertical direction by being engaged with the groove. Accordingly, the container can be stably conveyed.

According to a second aspect of the invention, in the container gripper according to the first aspect, the upper holding piece includes a protrusion that is engaged with the groove.

According to the container gripper, the upper holding piece includes a protrusion that is engaged with the groove of the screw part formed at the head part of the container. Accordingly, the held container can be positioned in the vertical direction.

According to a third aspect of the invention, in the container gripper according to any of the previous aspects, container holding portions of the holding pieces of the first gripper, container holding portions of the upper holding piece of the second gripper, and container holding portions of the lower holding piece of the second gripper are made of engineering plastic.

According to a fourth aspect of the invention, in the container gripper according to any of the first or second aspects, container holding portions of the holding pieces of the first gripper, container holding portions of the upper holding piece of the second gripper, and container holding portions of the lower holding piece of the second gripper are made of a super engineering plastic.

According to a fifth aspect of the invention, in the container gripper according to the fifth aspect, the super engineering plastic is polyether ether ketone (PEEK).

According to the container gripper, when the holding portions of the first gripper, or the container holding portions of the upper or lower holding pieces of the second gripper are made of engineering plastic, super engineering plastic, or polyether ether ketone (PEEK) of super engineering plastic even though the container is made of metal (aluminum or steel), it is possible to improve wear resistance and durability of the holding pieces of the first gripper and the container holding portions of the holding pieces of the second gripper. Further, it is possible to suppress damage to the held portion of the container that is caused by the holding of the grippers.

### Advantageous Effects of Invention

According to the above-mentioned container gripper, the holding pieces of the first gripper have a holding shape adapted to the neck part and hold the container so that the vertical posture of the container does not collapse and the container is positioned in the vertical direction; and the second gripper holds the container at two portions, that is, upper and lower holding pieces so that the vertical posture of the container does not collapse, and can position the container in the vertical direction by being engaged with the groove. Accordingly, the container can be stably conveyed.

### Brief Description of Drawings

Fig. 1 is a view showing a container.
Fig. 2 is a plan view of a container gripper according to an embodiment of the invention.
Fig. 3 is a sectional view taken along line III-III of Fig. 2.
Fig. 4A is an enlarged view showing the details of a container holding portion of a gripper and is a plan view of a holding piece of an upper holding piece.
Fig. 4B is an enlarged view showing the details of the container holding portion of the gripper and is a plan view of a holding piece of a lower holding piece.
Fig. 4C is an enlarged view showing the details of the container holding portion of the gripper and is a front view showing a state in which the upper holding piece and the lower holding piece are combined with each other.

### Description of Embodiments

An embodiment of the invention will be described below in detail with reference to the drawings. However, the invention is not limited to this embodiment. Further, components of the following embodiment include components that are easily supposed by those skilled in the art or substantially the same components.

### (Embodiment of the invention)

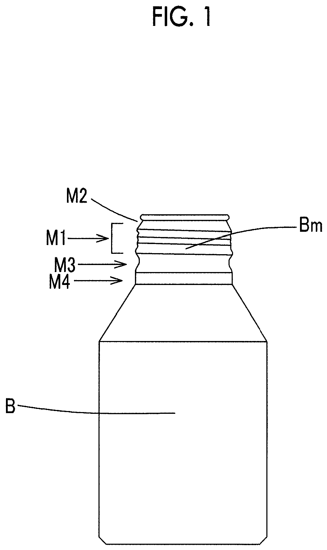

The embodiment of the invention will be described with reference to Figs. 1 to 4C.

Fig. 1 is a view showing a container.

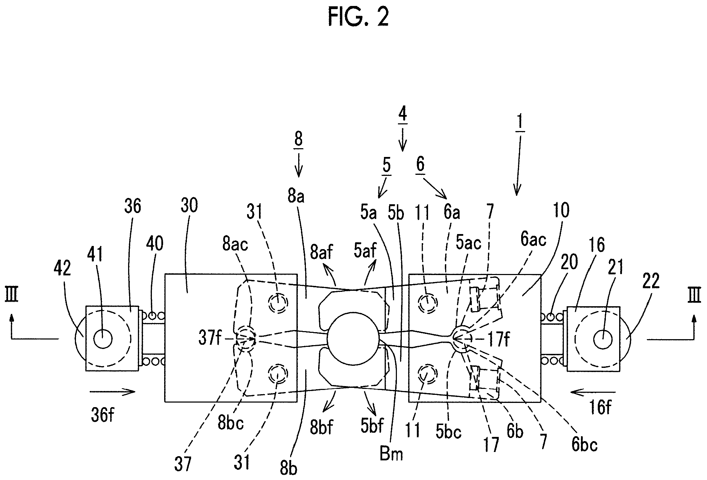

Fig. 2 is a plan view of a container gripper according to the embodiment of the invention.

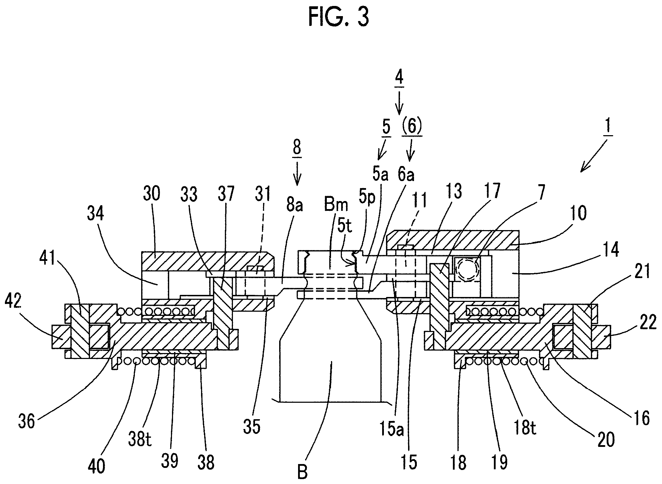

Fig. 3 is a sectional view taken along line III-III of Fig. 2.

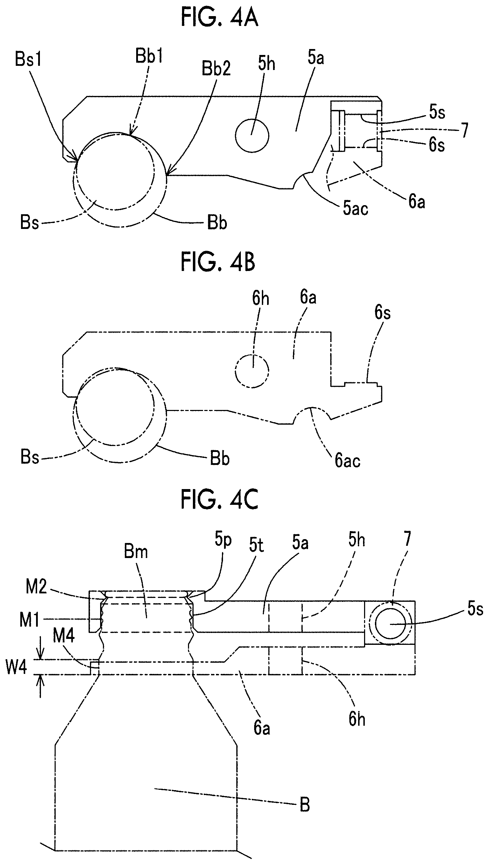

Figs. 4A to 4C are enlarged views showing the details of a container holding portion of the gripper.

In Fig. 1, a head part Bm of a container B includes a male screw part (hereinafter, simply referred to as a "screw part") M1 to which a cap (not shown) is fastened, a groove M2 of the screw part M1, a neck part M3, and a lower portion M4 of the neck part M3.

In Figs. 2 and 3, a container gripper 1 includes grippers (a first gripper 8 and a second gripper 4). The first gripper 8 includes a pair of holding pieces 8a and 8b that have a holding shape adapted to the neck part M3 (see Fig. 1) of the head part Bm of the container B and hold at least half of the circumference of the neck part. The second gripper 4 includes an upper holding piece 5 that includes a pair of holding pieces 5a and 5b engaged with the groove M2 (see Fig. 1) of the screw part M1 and holding at least half of the circumference of the groove M2, and a lower holding piece 6 that includes a pair of holding pieces 6a and 6b engaged with the lower portion M4 (see Fig. 1) of the neck part M3 and holding at least half of the circumference of the lower portion M4, like the upper holding piece 5.

The first gripper 8 is adapted so that the pair of holding pieces 8a and 8b can swing about shafts 31 as fulcrums in directions of arrows 8af and 8bf or opposite directions thereof. The shafts 31 are disposed between an upper gripper body 30 and a lower gripper body 38 that are assembled by a support 34, and end portions of the shafts 31 are fitted into the upper and lower gripper bodies 30 and 38.

The holding pieces 8a and 8b include arc-shaped notches 8ac and 8bc.

Since a cam follower 42, which rotates about a shaft 41 mounted on one end of a shaft body 36, is engaged with a cam (not shown), the shaft body 36 moves in a direction of an arrow 36f while sliding relative to a bearing 39. In this case, a pin 37 mounted on the other end of the shaft body 36 is pushed in a direction of an arrow 37f while being engaged with the arc-shaped notches 8ac and 8bc. At this time, the holding pieces 8a and 8b swing about the shafts 31 as fulcrums in the directions (opening directions) of the arrows 8af and 8bf shown in Fig. 2. As a result, the head part Bm of the container B can be taken in and out.

Further, when the engagement between the cam follower 42 of the shaft body 36 and the cam (not shown) is released, the shaft body 36 is moved in a direction opposite to the arrow 36f by the biasing of a compression spring 40 that is guided by an outer cylinder portion 38t of the lower gripper body 38. In this case, the pin 37 is pushed in a direction opposite to the arrow 37f while being engaged with the arc-shaped notches 8ac and 8bc. At this time, the holding pieces 8a and 8b swing about the shafts 31 as fulcrums in directions (closing directions) opposite to the arrows 8af and 8bf shown in Fig. 2. As a result, at least half of the circumference of the neck part M3 of the head part Bm of the container B is held and restrained.

Meanwhile, a slide plate 33 is disposed between the holding pieces 8a and 8b and the upper gripper body 30. A slide plate 35 is disposed between the holding pieces 8a and 8b and the lower gripper body 38. The holding pieces 8a and 8b are interposed between the slide plates 33 and 35 and are adapted to swing as described above.

The upper holding piece 5 of the second gripper 4 is adapted so that the pair of holding pieces 5a and 5b can swing about shafts 11 as fulcrums in directions of arrows 5af and 5bf shown in Fig. 2 or opposite directions thereof. The shafts 11 are disposed between an upper gripper body 10 and a lower gripper body 18 that are assembled by a support 14, and end portions of the shafts 11 are fitted into the upper and lower gripper bodies 10 and 18.

Further, like the upper holding piece 5, the lower holding piece 6 of the second gripper 4 is adapted so that a pair of holding pieces 6a and 6b can swing about the shafts 11 as fulcrums in the same directions as the directions of the arrows 5af and 5bf or opposite directions thereof.

The lower holding piece 6 will be described in detail. The pair of holding pieces 6a and 6b include arc-shaped notches 6ac and 6bc as in the description of the pair of holding pieces 8a and 8b of the first gripper 8.

Since a cam follower 22, which rotates about a shaft 21 mounted on one end of a shaft body 16, is engaged with a cam (not shown), the shaft body 16 moves in a direction of an arrow 16f while sliding relative to a bearing 19. In this case, a pin 17 mounted on the other end of the shaft body 16 is pushed in a direction of an arrow 17f while being engaged with the arc-shaped notches 6ac and 6bc. At this time, the holding pieces 6a and 6b swing about the shafts 11 as fulcrums in the directions (opening directions) of the arrows 5af and 5bf shown in Fig. 2. As a result, the head part Bm of the container B can be taken in and out.

Furthermore, when the engagement between the cam follower 22 of the shaft body 16 and the cam (not shown) is released, the shaft body 16 is moved in a direction opposite to the arrow 16f by the biasing of a compression spring 20 that is guided by an outer cylinder portion 18t of the lower gripper body 18. In this case, the pin 17 is pushed in a direction opposite to the arrow 17f while being engaged with the arc-shaped notches 6ac and 6bc. At this time, the holding pieces 6a and 6b swing about the shafts 11 as fulcrums in directions (closing directions) opposite to the arrows 5af and 5bf shown in Fig. 2. As a result, at least half of the circumference of the lower portion M4 of the neck part M3 of the head part Bm of the container B can be held and restrained.

Meanwhile, a slide plate 15 is disposed between the holding pieces 6a and 6b and the lower gripper body 18. The pair of holding pieces 6a and 6b slides relative to the slide plate 15 and are adapted to swing as described above.

The upper holding piece 5 will be described in detail. The pair of holding pieces 5a and 5b include arc-shaped notches 5ac and 5bc.

The pin 17 is pushed in the direction of the arrow 17f while being engaged with the arc-shaped notches 5ac and 5bc. At this time, the holding pieces 5a and 5b swing about the shafts 11 as fulcrums in the directions (opening directions) of the arrows 5af and 5bf shown in Fig. 2. As a result, the head part Bm of the container B can be taken in and out. Further, when the pin 17 moves in the direction opposite to the arrow 17f and the arc-shaped notches 5ac and 5bc are disengaged from the pin 17, the holding pieces 5a and 5b swing in directions (closing directions) opposite to the arrows 5af and 5bf shown in Fig. 2 by the biasing of a compression spring 7 to be described below. As a result, the groove M2 of the screw part M1 of the head part Bm of the container B is engaged with protrusions 5p of the holding pieces 5a and 5b to be described below, and at least half of the circumference of the groove M2 can be held and restrained.

Meanwhile, a slide plate 13 is disposed between the holding pieces 5a and 5b and the upper gripper body 10. A slide plate 15a is disposed between the holding pieces 5a and 5b and the lower holding piece 6. The pair of holding pieces 5a and 5b are interposed between the slide plates 13 and 15a, and are adapted to swing as described above.

Meanwhile, Fig. 3 shows a case in which the upper holding piece 5 includes a cylinder portion 5t capable of holding an outer-diameter portion of the screw part M1 in addition to the protrusion 5p.

Further, container holding portions of the pair of holding pieces 8a and 8b, the pair of holding pieces 5a and 5b, and the pair of holding pieces 6a and 6b are likely to wear out when the head part Bm, which is an object to be held, is made of metal. For this reason, engineering plastics or super engineering plastics are selected as the material of the container holding portion. Particularly, it is preferable that polyether ether ketone (PEEK) is selected among super engineering plastics.

Here, the upper holding piece 5, the lower holding piece 6, and the first gripper 8 will be described in detail with reference to Figs. 4A to 4C.

Fig. 4A is a plan view of the holding piece 5a. In Fig. 4A, for convenience of illustration, a combination of the holding piece 6a shown by an alternate long and three short dashes line and the compression spring 7 shown by an alternate long and two short dashes line is partially shown, a large-diameter head part Bb is shown by an alternate long and one short dash line, and a small-diameter head part Bs is shown by an alternate long and two short dashes line.

Fig. 4B is a plan view in which the holding piece 6a is shown by an alternate long and three short dashes line. In Fig. 4B, the large-diameter head part Bb is shown by an alternate long and one short dash line and the small-diameter head part Bs is shown by an alternate long and two short dashes line.

Fig. 4C is a front view showing a state in which the holding piece 5a (shown by a solid line) and the holding piece 6a (shown by an alternate long and three short dashes line) holding the head part Bm are combined with each other.

In Fig. 4A, a holding portion, which holds the head part Bm and is formed at one end of the holding piece 5a, is formed in a curved shape so as to be capable of being used for both the large-diameter head part Bb having a large diameter of the head part Bm and the small-diameter head part Bs having a small diameter of the head part Bm. The holding portion is formed so as to come into contact with the large-diameter head part Bb at a portion Bs1 and between a portion Bb1 and a portion Bb2 as shown in Fig. 4A. The holding portion is formed so as to come into contact with the small-diameter head part Bs between a portion Bb1 and a portion Bb2 as shown in Fig. 4A.

Although not shown in Fig. 4A, the holding piece 5b shown in Fig. 2 is also formed so as to have a position and shape symmetrical to the holding piece 5a. As in the holding piece 5a, a head part holding portion is formed so as to be capable of being used for both the large-diameter head part Bb having a large diameter of the head part Bm and the small-diameter head part Bs having a small diameter of the head part Bm.

Further, although not shown, as in the holding pieces 5a and 5b, a head part holding portion of each of the holding pieces 6a and 6b and the holding pieces 8a and 8b of the first gripper 8 is also formed so as to be capable of being used for both the large-diameter head part Bb having a large diameter of the head part Bm and the small-diameter head part Bs having a small diameter of the head part Bm.

Meanwhile, when the head part Bm is held by the holding pieces 5a and 5b, the holding pieces 6a and 6b, and the holding pieces 8a and 8b, the curved shape of the head part holding portion is formed so as to be concentric with the head part Bm (so as to form a concentric circle) in the cases of a small diameter and a large diameter.

As described above, at least half of the circumference of the head part Bm is held by the holding pieces 5a and 5b, the holding pieces 6a and 6b, and the holding pieces 8a and 8b in the cases of a small diameter and a large diameter.

Further, in Figs. 4A to 4C, a spring seat 5s is formed at the other end of the holding piece 5a. Meanwhile, a spring seat 6s is also formed at a portion of the holding piece 6a corresponding to the spring seat 5s. The spring seat 5s is pushed against the spring seat 6s with the compression spring 7 interposed therebetween. The holding piece 5a is biased by the compression spring 7 so as to swing about the shaft 11 (see Fig. 2), which comes into contact with an inner peripheral surface of a hole 5h, as a fulcrum in a direction (closing direction) opposite to an arrow 5af shown in Fig. 2.

That is, when the pin 17 shown in Fig. 2 is pushed in the direction of an arrow 17f, the lower holding piece 6 swings about the shaft 11 (see Fig. 2) as a fulcrum. At this time, the holding pieces 6a and 6b move in the directions of the arrows 5af and 5bf, and the shafts 11 come into contact with the inner peripheral surfaces of holes 6h. Furthermore, when the pin 17 is moved in the opposite direction of the arrow 17f by the biasing of the compression spring 20, the lower holding piece 6 swings about the shafts 11 as fulcrums. At this time, the holding pieces 6a and 6b move in directions opposite to the directions of the arrows 5af and 5bf.

Meanwhile, when the pin 17 shown in Fig. 2 is pushed in the direction of the arrow 17f, the upper holding piece 5 swings together with lower holding piece 6. At this time, the holding pieces 5a and 5b move in the directions of the arrows 5af and 5bf. Further, after the pin 17 moves in the opposite direction of the arrow 17f, the upper holding piece 5 swings about the shafts 11 as fulcrums by the biasing of the compression spring 7 against the lower holding piece 6. At this time, the holding pieces 5a and 5b move in directions (closing directions) opposite to the arrows 5af and 5bf.

That is, the upper and lower holding pieces 5 and 6 are adapted to be closed independently of each other.

Next, the operation of the container gripper 1 according to the embodiment of the invention will be described.

The holding of a container B is alternately switched to the second gripper 4 from the first gripper 8, so that the container P is delivered.

In the first gripper 8, when the shaft body 36 moves in the direction of the arrow 36f and the arc-shaped notches 8ac and 8bc are pushed in the direction of the arrow 37f by the pin 37, the pair of holding pieces 8a and 8b swing about the shafts 31 as fulcrums in the directions (opening directions) of the arrows 8af and 8bf. For this reason, in the delivery of the container B from a previous process or to a post-process, the neck part M3 of the head part Bm of the container B can be taken in and out.

Further, in the first gripper 8, the shaft body 36 is moved in the direction opposite to the arrow 36f by the biasing of the compression spring 40. Accordingly, the pin 37 is moved in the direction opposite to the arrow 37f, so that the arc-shaped notches 8ac and 8bc are pushed in the direction opposite to the arrow 37f. For this reason, the pair of holding pieces 8a and 8b swing about the shafts 31 as fulcrums in directions (closing directions) opposite to the arrows 8af and 8bf.

As described above, the first gripper 8 has a holding shape that is adapted to the neck part M3 of the head part Bm of the container B delivered from the previous process, holds and restrains the neck part M3, and positions the container in a vertical direction.

In the second gripper 4, when the shaft body 16 moves in the direction of the arrow 16f and the arc-shaped notches 6ac and 6bc are pushed in the direction of the arrow 17f by the pin 17, the pair of holding pieces 6a and 6b of the lower holding piece 6 swing about the shafts 11 as fulcrums in the directions (opening directions) of the arrows 5af and 5bf. For this reason, in the delivery of the container B from a previous process or to a post-process, the lower portion M4 of the neck part M3 of the head part Bm of the container B can be taken in and out.

Further, in the second gripper 4, the shaft body 16 is moved in the direction opposite to the arrow 16f by the biasing of the compression spring 20. Accordingly, the pin 17 is moved in the direction opposite to the arrow 17f, so that the arc-shaped notches 6ac and 6bc are pushed in the direction opposite to the arrow 17f. For this reason, the pair of holding pieces 6a and 6b of the lower holding piece 6 swing about the shafts 11 as fulcrums in directions (closing directions) opposite to the arrows 5af and 5bf.

As described above, the second gripper 4 holds and restrains the lower portion M4 of the neck part M3 of the head part Bm of the container B that is delivered from the previous process.

Furthermore, in the second gripper 4, when the shaft body 16 moves in the direction of the arrow 16f and the arc-shaped notches 5ac and 5bc are pushed in the direction of the arrow 17f by the pin 17, the pair of holding pieces 5a and 5b of the upper holding piece 5 swing about the shafts 11 as fulcrums in the directions (opening directions) of the arrows 5af and 5bf. For this reason, in the delivery of the container B from the previous process or to the post-process, the screw part M1 of the head part Bm of the container B can be taken in and out.

Further, in the second gripper 4, when the shaft body 16 moves in the direction opposite to the arrow 16f and the pin 17 is moved in the direction opposite to the arrow 17f with this movement of the shaft body 16, the push of the arc-shaped notches 5ac and 5bc is released. For this reason, the pair of holding pieces 5a and 5b of the upper holding piece 5 swing in directions (closing directions) opposite to the arrows 5af and 5bf by the biasing of the compression spring 7.

As described above, the second gripper 4 holds and restrains the screw part M1 of the head part Bm of the container B that is delivered from the previous process.

Here, when the pair of holding pieces 5a and 5b of the upper holding piece 5 hold the screw part M1 of the head part Bm of the container B, the protrusions 5p are engaged with the groove M2 of the screw part M1. Accordingly, the held container B can be positioned in the vertical direction. Furthermore, when the pair of holding pieces 5a and 5b of the upper holding piece 5 hold the screw part M1 of the head part Bm of the container B, the protrusions 5p are engaged with the groove M2 of the screw part M1 and the cylinder portions 5t formed below the protrusions 5p hold the outer-diameter portion of the screw part M1. Accordingly, the held container B can be positioned in the vertical direction.

A case in which the cylinder portions 5t hold the outer-diameter portion of the screw part M1 has been described above, but the protrusions 5p may merely be engaged with the groove M2 of the screw part M1.

Meanwhile, the swing (opening/closing) operation of the pair of holding pieces 6a and 6b of the lower holding piece 6 of the second gripper 4 and the swing (opening/closing) operation of the pair of holding pieces 5a and 5b of the upper holding piece 5 are performed by a push mechanism using the same pin 17 in the case of an opening operation, but performed by closing mechanisms using the biasing of the compression springs 20 and 7, respectively. That is, since the closing operations of the lower and upper holding pieces 6 and 5 are independent of each other, the lower and upper holding pieces 6 and 5 can appropriately hold the head part even though the diameters of the holding portions of the lower and upper holding pieces 6 and 5, which hold the head part Bm, are different from each other.

Further, two portions of the second gripper 4 in the vertical direction, that is, the lower portion M4 of the neck part M3 and the groove M2 of the screw part M1 positioned above the lower portion M4 are held by the lower and upper holding pieces 6 and 5. Accordingly, the posture of the held container B becomes stable, so that the container can be stably conveyed.

Furthermore, since a bottle can of which the diameter of the head part Bm is large is formed in a shape in which a holding width W4 of the lower portion M4 shown in Fig. 4C is small, the holding of the bottle can is not stable and a holding posture thereof may not be vertical. However, since the second gripper 4 can hold the head part Bm by the upper and lower holding pieces 5 and 6, the posture of the held container B is stable even in the case of a bottle can of which the diameter of the head part Bm is large.

In addition, the holding portions of the pair of holding pieces 8a and 8b of the first gripper 8, the pair of holding pieces 6a and 6b of the lower holding piece 6 of the second gripper 4, and the pair of holding pieces 5a and 5b of the upper holding piece 5 of the second gripper 4, which hold the head part Bm, can be used for both the large-diameter head part Bb and the small-diameter head part Bs. Accordingly, it is possible to cope with the large-diameter head part and the small-diameter head part without changing the grippers.

Further, engineering plastics or super engineering plastics or polyether ether ketone (PEEK) among super engineering plastics are used as the materials of the holding portions, which hold the head part Bm, of the pair of holding pieces 8a and 8b, the pair of holding pieces 5a and 5b, and the pair of holding pieces 6a and 6b. Accordingly, when the head part Bm of the container B is held by the holding portions, the wear resistance and durability of the holding portions can be improved. For this reason, it is possible to hold the container so that the held portion of the container is not damaged.

In particular, when the head part Bm, which is an object to be held, is a bottle can made of metal (aluminum or steel), the held portion has a significant influence on wear due to the repetition of the holding. However, when polyether ether ketone (PEEK) is selected, a holding piece excellent in wear resistance and durability is obtained.

### Industrial Applicability

According to this container gripper, holding pieces of the first gripper have a holding shape adapted to the neck part and hold the container so that the vertical posture of the container does not collapse and the container is positioned in the vertical direction; and the second gripper holds the container at two portions, that is, upper and lower holding pieces so that the vertical posture of the container does not collapse, and can position the container in the vertical direction by being engaged with the groove. Accordingly, the container can be stably conveyed.

### Reference Signs List

- 1:: CONTAINER GRIPPER
- 4:: SECOND GRIPPER (GRIPPER)
- 5:: UPPER HOLDING PIECE
- 5a, 5b:: HOLDING PIECE
- 6:: LOWER HOLDING PIECE
- 6a, 6b:: HOLDING PIECE
- 7:: COMPRESSION SPRING
- 8:: FIRST GRIPPER (GRIPPER)
- 8a, 8b:: HOLDING PIECE
- 11, 31:: SHAFT
- 16, 36:: SHAFT BODY
- 17, 37:: PIN
- 20, 40:: COMPRESSION SPRING
- B:: CONTAINER
- Bm:: HEAD PART (OF CONTAINER)
- M1:: (MALE) SCREW PART
- M2:: GROOVE
- M3:: NECK PART
- M4:: LOWER PORTION (OF NECK PART)

## Claims

1. A container gripper (1) comprising:
grippers (4, 8) each of which includes a pair of holding pieces provided so as to be openable/closable by relative movement and includes holding portions allowing a head part (Bm) of a container (B) to be taken in and out when the gripper (4, 8) is opened and restraining the head part (Bm) when the gripper is closed,
wherein the holding of the container (B) is alternately switched from a first gripper (8) to a second gripper (4), so that the container (B) is delivered, and wherein the holding portions of the first gripper (8) include holding pieces (8a, 8b) that have a holding shape adapted to a neck part (M3) formed at the head part (Bm) and adapted to hold at least half of the circumference of the neck part (M3),
the holding portions of the second gripper (4) include an upper holding piece (5) and a lower holding piece (6), the upper holding piece (5) includes a first and a second upper holding piece (5a, 5b) engageable with a groove (M2) of a male screw part (M1) formed at the head part (Bm) and being capable of holding at least half of the circumference of the groove (M2), the lower holding piece (6) includes a first and a second lower holding piece (6a, 6b) engageable with a lower portion (M4) of the neck part (M3) and being capable of holding at least half of the circumference of the lower portion (M4),
the holding portions are formed at one end of the upper holding pieces (5a, 5b) and of the lower holding pieces (6a, 6b),
**characterized in that**,
the first upper holding piece (5a) and the first lower holding piece (6a) can swing about a first shaft (11), the second upper holding piece (5b) and the second lower holding piece (6b) can swing about a second shaft (11), the shafts (11) are disposed between an upper gripper body (10) and a lower gripper body (18) that are assembled by a support (14), and end portions of the shafts (11) are fitted into the upper and lower gripper bodies (10, 18),
an upper spring seat (5s) is formed at the other end of each of the first and second upper holding pieces (5a, 5b) and a lower spring seat (6s) is also formed at a portion of each of the first and second lower holding pieces (6a, 6b) corresponding to the respective upper spring seat (5s) with a first compression spring (7) interposed between the first upper holding piece (5a) and the first lower holding piece (6a) and with a second compression spring interposed between the second upper holding piece (5a) and the second lower holding piece (6a), such that each upper holding piece (5a, 5b) is biased by the respective compression spring (7) so as to swing about the respective shaft (11),
which comes into contact with an inner peripheral surface of a hole (5h) of each of the upper holding pieces (5a, 5b).

2. The container gripper (1) according to claim 1,
wherein the upper holding piece (5) includes a protrusion (5p) that is engageable with the groove (M2).

3. The container gripper (1) according to claim 1 or 2,
wherein container holding portions of the holding pieces of the first gripper (8), container holding portions of the upper holding piece (5) of the second gripper (4), and container holding portions of the lower holding piece (6) of the second gripper (4) are made of engineering plastic.

4. The container gripper (1) according to claim 1 or 2,
wherein container holding portions of the holding pieces of the first gripper (8), container holding portions of the upper holding piece (5) of the second gripper (4), and container holding portions of the lower holding piece (6) of the second gripper (4) are made of super engineering plastic.

5. The container gripper (1) according to claim 4,
wherein the super engineering plastic is polyether ether ketone.

## Patentansprüche

1. Behältergreifer (1), umfassend:
Greifer (4, 8), von denen jeder ein Paar Haltestücke einschließt, die so bereitgestellt sind, dass sie durch Relativbewegung geöffnet/geschlossen werden können, und Halteabschnitte einschließt, die es ermöglichen, ein Kopfteil (Bm) eines Behälters (B) aufzunehmen und zu entnehmen, wenn der Greifer (4, 8) geöffnet ist, und das Kopfteil (Bm) festzuhalten, wenn der Greifer geschlossen ist,
wobei das Halten des Behälters (B) abwechselnd von einem ersten Greifer (8) auf einen zweiten Greifer (4) umgewechselt wird, so dass der Behälter (B) abgegeben wird, und wobei die Halteabschnitte des ersten Greifers (8) Haltestücke (8a, 8b) einschließen, die eine Halteform aufweisen, die an ein Halsteil (M3) angepasst ist, das an dem Kopfteil (Bm) ausgebildet ist und angepasst ist, um mindestens die Hälfte des Umfangs des Halsteils (M3) zu halten,
wobei die Halteabschnitte des zweiten Greifers (4) ein oberes Haltestück (5) und ein unteres Haltestück (6) einschließen, wobei das obere Haltestück (5) ein erstes und ein zweites oberes Haltestück (5a, 5b) einschließt, die mit einer Nut (M2) eines Außengewindeteils (M1) in Eingriff bringbar sind, das an dem Kopfteil (Bm) ausgebildet ist und in der Lage ist, mindestens die Hälfte des Umfangs der Nut (M2) zu halten, wobei das untere Haltestück (6) ein erstes und ein zweites unteres Haltestück (6a, 6b) einschließt, die mit einem unteren Abschnitt (M4) des Halsteils (M3) in Eingriff bringbar sind und in der Lage sind, mindestens die Hälfte des Umfangs des unteren Abschnitts (M4) zu halten,
wobei die Halteabschnitte an einem Ende der oberen Haltestücke (5a, 5b) und der unteren Haltestücke (6a, 6b) ausgebildet sind,
**dadurch gekennzeichnet, dass**
das erste obere Haltestück (5a) und das erste untere Haltestück (6a) um eine erste Welle (11) schwingen können, das zweite obere Haltestück (5b) und das zweite untere Haltestück (6b) um eine zweite Welle (11) schwingen können, die Wellen (11) zwischen einem oberen Greiferkörper (10) und einem unteren Greiferkörper (18) angeordnet sind, die durch eine Halterung (14) zusammengebaut sind, und Endabschnitte der Wellen (11) in den oberen und unteren Greiferkörper (10, 18) eingepasst sind,
ein oberer Federsitz (5s) an dem anderen Ende jedes der ersten und zweiten oberen Haltestücke (5a, 5b) und ein unterer Federsitz (6s) ebenfalls an einem Abschnitt jedes der ersten und zweiten unteren Haltestücke (6a, 6b), der dem jeweiligen oberen Federsitz (5s) entspricht, mit einer ersten Druckfeder (7), die zwischen dem ersten oberen Haltestück (5a) und dem ersten unteren Haltestück (6a) angeordnet ist, und mit einer zweiten Druckfeder, die zwischen dem zweiten oberen Haltestück (5a) und dem zweiten unteren Haltestück (6a) angeordnet ist, ausgebildet ist, und zwar derart, dass jedes obere Haltestück (5a, 5b) durch die jeweilige Druckfeder (7) so vorgespannt ist, dass es um die jeweilige Welle (11) schwingt, die mit einer inneren Umfangsfläche eines Lochs (5h) jedes der oberen Haltestücke (5a, 5b) in Kontakt kommt.

2. Behältergreifer (1) nach Anspruch 1,
wobei das obere Haltestück (5) einen Vorsprung (5p) einschließt, der mit der Nut (M2) in Eingriff bringbar ist.

3. Behältergreifer (1) nach Anspruch 1 oder 2,
wobei Behälterhalteabschnitte der Haltestücke des ersten Greifers (8), Behälterhalteabschnitte des oberen Haltestücks (5) des zweiten Greifers (4) und Behälterhalteabschnitte des unteren Haltestücks (6) des zweiten Greifers (4) aus technischem Kunststoff hergestellt sind.

4. Behältergreifer (1) nach Anspruch 1 oder 2,
wobei Behälterhalteabschnitte der Haltestücke des ersten Greifers (8), Behälterhalteabschnitte des oberen Haltestücks (5) des zweiten Greifers (4) und Behälterhalteabschnitte des unteren Haltestücks (6) des zweiten Greifers (4) aus supertechnischem Kunststoff hergestellt sind.

5. Behältergreifer (1) nach Anspruch 4,
wobei der supertechnische Kunststoff Polyetheretherketon ist.

## Revendications

1. Appareil de préhension de contenant (1) comprenant :
des appareils de préhension (4, 8) incluant chacun une paire de pièces de maintien prévues pour pouvoir être ouvertes/fermées par un mouvement relatif et incluant des parties de maintien permettant à une partie tête (Bm) d'un contenant (B) d'être introduite et sortie lorsque l'appareil de préhension (4, 8) est ouvert et retenant la partie tête (Bm) lorsque l'appareil de préhension est fermé,
dans lequel le maintien du contenant (B) est commuté alternativement entre un premier appareil de préhension (8) et un second appareil de préhension (4), de façon à fournir le contenant (B), et dans lequel les parties de maintien du premier appareil de préhension (8) incluent des pièces de maintient (8a, 8b) qui ont une forme de maintien adaptée à une partie col (M3) formée au niveau de la partie tête (Bm) et adaptée pour maintenir au moins la moitié de la circonférence de la partie col (M3),
les parties de maintien du second appareil de préhension (4) incluent une pièce de maintien supérieure (5) et une pièce de maintien inférieure (6), la pièce de maintien supérieure (5) incluant une première et une seconde pièce de maintien supérieure (5a, 5b) pouvant venir en prise avec une rainure (M2) d'une partie vis mâle (M1) formée au niveau de la partie tête (Bm) et étant capables de maintenir au moins la moitié de la circonférence de la rainure (M2), la pièce de maintien inférieure (6) incluant une première et une seconde pièce de maintien inférieure (6a, 6b) pouvant venir en prise avec une partie inférieure (M4) de la partie col (M3) et étant capables de maintenir au moins la moitié de la circonférence de la partie inférieure (M4),
les parties de maintien sont formées à une extrémité des pièces de maintien supérieures (5a, 5b) et des pièces de maintien inférieures (6a, 6b),
**caractérisé en ce que**,
la première pièce de maintien supérieure (5a) et la première pièce de maintien inférieure (6a) peuvent osciller autour d'un premier arbre (11), la seconde pièce de maintien supérieure (5b) et la seconde pièce de maintien inférieure (6b) peuvent osciller autour d'un second arbre (11), les arbres (11) sont disposés entre un corps d'appareil de préhension supérieur (10) et un corps d'appareil de préhension inférieur (18) qui sont assemblés par un support (14), et des parties extrémité des arbres (11) sont ajustés dans les corps d'appareil de préhension supérieur et inférieur (10, 18),
un siège de ressort supérieur (5s) est formé au niveau de l'autre extrémité de chacune des première et seconde pièces de maintien supérieures (5a, 5b) et un siège de ressort inférieur (6s) est également formé au niveau d'une partie de chacune des première et seconde pièces de maintien inférieures (6a, 6b) correspondant au siège de ressort supérieur (5s) respectif avec un premier ressort de compression (7) interposé entre la première pièce de maintien supérieure (5a) et la première pièce de maintien inférieure (6a) et avec un second ressort de compression interposé entre la seconde pièce de maintien supérieure (5a) et la seconde pièce de maintien inférieure (6a), de telle sorte que chaque pièce de maintien supérieure (5a, 5b) est sollicitée par le ressort de compression (7) respectif de manière à osciller autour de l'arbre respectif (11), qui vient en contact avec une surface périphérique interne d'un orifice (5h) de chacune des pièces de maintien supérieures (5a, 5b).

2. Appareil de préhension de contenant (1) selon la revendication 1,
dans lequel la pièce de maintien supérieure (5) inclut une saillie (5p) qui peut venir en prise avec la rainure (M2).

3. Appareil de préhension de contenant (1) selon la revendication 1 ou 2,
dans lequel des parties de maintien de contenant des pièces de maintien du premier appareil de préhension (8), des parties de maintien de contenant de la pièce de maintien supérieure (5) du second appareil de préhension (4) et des parties de maintien de contenant de la pièce de maintien inférieure (6) du second appareil de préhension (4) sont constituées de plastique d'ingénierie.

4. Appareil de préhension de contenant (1) selon la revendication 1 ou 2,
dans lequel des parties de maintien de contenant des pièces de maintien du premier appareil de préhension (8), des pièces de maintien de contenant de la pièce de maintien supérieure (5) du second appareil de préhension (4) et des pièces de maintien de contenant de la pièce de maintien inférieure (6) du second appareil de préhension (4) sont constituées de superplastique d'ingénierie.

5. Appareil de préhension de contenant (1) selon la revendication 4,
dans lequel le superplastique d'ingénierie est du polyéther-éther-cétone.
